# EUROPÄISCHE PATENTANMELDUNG

(11) **EP 3 892 794 A1**
(43) Veröffentlichungstag der Anmeldung: **13.10.2021**
(21) Anmeldenummer: 20168759.7
(22) Anmeldetag: 08.04.2020
(51) Int. Cl.: E04F 15/02, E04F 15/10, F24D 3/12, F24D 13/02

(54) **BELAGSYSTEM FÜR EINEN FUSSBODEN, EINE WAND UND/ODER EINE DECKE**

(71) Anmelder: Flooring Technologies Ltd., Kalkara SCM1001 (MT)
(72) Erfinder: Dicke, Sebastian, 16868 Bantikow (DE)
(74) Vertreter: Gramm, Lins & Partner Patent- und Rechtsanwälte PartGmbB

(57) **Zusammenfassung**

Die Erfindung betrifft ein Belagsystem (2) für einen Fußboden, eine Wand und/oder eine Decke, wobei das Belagsystem
- eine Sichtseite (20),
- eine der Sichtseite gegenüberliegende Unterseite und
- eine Mehrzahl miteinander verbundener Belagelemente (4) aufweist,
wobei zwischen wenigstens zwei der Belagelemente wenigstens ein Leitungselement (6) derart angeordnet ist, dass das wenigstens eine Leitungselement zumindest abschnittsweise an der Sichtseite sichtbar ist, wobei das wenigstens eine Leitungselement eingerichtet ist zum Leiten einer physikalischen Größe, eines Materials oder von Signalen, wobei wenigstens ein Leitungselement eine Schnittstelle (10) zu einer Quelle oder einem Verbraucher der physikalischen Größe, des Materials oder der Signale aufweist.

## Beschreibung

Die Erfindung betrifft ein Belagsystem für einen Fußboden, eine Wand und/oder eine Decke, wobei das Belagsystem eine Sichtseite, eine der Sichtseite gegenüberliegende Unterseite und eine Mehrzahl miteinander verbundener Belagelemente aufweist, wobei zwischen wenigstens zwei der Belagelemente wenigstens ein Leitungselement derart angeordnet ist, dass das wenigstens eine Leitungselement zumindest abschnittsweise an der Sichtseite sichtbar ist.

Derartige Belagsysteme sind aus dem Stand der Technik seit langem bekannt und werden verwendet, um Fußböden, Wände und/oder Decken zu verkleiden. Die einzelnen Belagelemente weisen handliche Größen auf und sind in der Regel einfach miteinander verbindbar, indem beispielsweise an den Seitenflächen der Belagelemente vorhandenen Nuten und Federn ineinander eingesteckt werden. Derartige oder andere Verbindungselemente sind mit Verriegelungselementen ausgestattet, sodass die einzelnen Belagelemente sicher miteinander verbunden werden können. Dies ist insbesondere in Form von Laminatpaneelen aus dem Stand der Technik bekannt.

Aus der EP 2 353 821 A1 sind derartige Verriegelungselemente bekannt. Die beiden Paneele, die die Belagelemente bilden, werden dabei so miteinander verbunden, das auf der Sichtseite zwischen den beiden Paneelen ein Spalt verbleibt. In diesem Spalt wird ein Oberflächenelement oder Fugenelement, beispielsweise ein Keder eingesetzt. Dieser ist an der Sichtseite sichtbar und wird als dekoratives Element verwendet.

Ein dekoratives Element ist auch aus der EP 2 221 431 B1 bekannt, das zwischen den beiden Paneelen, die auch bei dem in diesem Dokument beschriebenen Fußboden die Belagelemente bilden, angeordnet ist. In dieser Ausführung erstreckte es sich über die gesamte Dicke des herzustellenden Fußbodenbelages, also von der Sichtseite bis zu der gegenüberliegenden Unterseite. Es wird an dafür vorgesehenen Verbindungselementen an einer Seitenfläche eines der Paneele angeordnet. Auf der von diesem Paneel abweisenden Seite verfügt es über das Verriegelungselement, das in eine Nut eingebracht wird, die an einer Seitenfläche eines benachbarten Paneels angeordnet ist.

Die EP 2 116 778 B1 beschreibt ein anderes Belagsystem. An der Unterseite der einzelnen Belagelemente ist eine Schicht aus einem elektrisch leitfähigen Material angeordnet. Die Verbindungselemente zwischen den einzelnen Belagelementen sind so ausgebildet, dass beim Verbinden der Belagelemente miteinander eine elektrische Verbindung auch zwischen den jeweiligen Schichten aus elektrisch leitfähigem Material hergestellt wird. Die Schichten, die sich im verlegten Zustand auf der Unterseite des gesamten Fußbodens erstrecken, werden später mit elektrischen Strom beaufschlagt und können so als Fußbodenheizung verwendet werden.

Der Erfindung liegt die Aufgabe zugrunde, ein Belagsystem für einen Fußboden, eine Wand und/oder eine Decke so weiterzuentwickeln, dass verschiedene Funktionen in das Belagsystem integrierbar und das Belagsystem auf diese Weise vielseitig einsetzbar ist.

Die Erfindung löst die gestellte Aufgabe durch ein Belagsystem gemäß dem Oberbegriff des Anspruchs 1, das sich dadurch auszeichnet, dass das wenigstens eine Leitungselement eingerichtet ist zum Leiten einer physikalischen Größe, eines Materials oder von Signalen, wobei wenigstens ein Leitungselement eine Schnittstelle zu einer Quelle oder einem Verbraucher der physikalischen Größe, des Materials oder der Signale aufweist.

Durch die erfindungsgemäße Ausgestaltung des Belagsystems lässt sich die zu leitende physikalische Größe, das Material oder das Signal entlang des Belagsystems an nahezu jede gewünschte Stelle des Fußbodens, der Wand und/oder der Decke leiten. Dies ist beispielsweise die Stelle, an der ein Verbraucher für die zu leitende physikalische Größe, das Material oder das Signal angeordnet ist. Da das Leitungselement von der Sichtseite des Belagsystems aus sichtbar ist, kann es zudem als Dekorelement verwendet werden und ist leicht zugänglich. In einer bevorzugten Ausgestaltung ist das Leitungselement auch im verlegten Zustand des Belagsystems austauschbar und kann beispielsweise für Wartung oder Reparatur aus dem Belagsystem entfernt und später wieder eingesetzt werden. Dafür ist es von Vorteil, wenn die benachbarten Belagelemente, zwischen denen das Leitungselement angeordnet ist, im verlegten und miteinander verbundenen Zustand eine Nut oder Rille, im allgemeinen also eine von der Sichtseite aus zugängliche Vertiefung bilden. In dieser kann das wenigstens eine Leitungselement angeordnet werden, sodass es von der Sichtseite aus sichtbar und zugänglich ist. Dadurch können auch bestehende Belagsysteme, die über eine solche Vertiefung, Rille oder Nut in ihrer Sichtseite verfügen, nachgerüstet werden.

Dass das wenigstens eine Leitungselement zwischen den zwei Belagelementen angeordnet ist, bedeutet insbesondere, dass auf zwei gegenüberliegenden Seiten des Leitungselementes jeweils ein Belagelement angeordnet ist. Es bedeutet insbesondere nicht, dass sich die beiden Belagelemente ansonsten nicht berühren dürfen, oder dass das wenigstens eine Leitungselement vollständig zwischen den beiden Belagelementen angeordnet ist. Es ist durchaus von Vorteil, wenn die Belagelemente, beispielsweise Paneele mit einem Kern aus Holzwerkstoff, insbesondere MDF, HDF oder OSB, zueinander korrespondierende Verbindungs- und/oder Verriegelungselemente aufweisen. Diese sind vorzugsweise derart ausgebildet, dass die Verbindungs- und/oder Verriegelungselemente zweier benachbarter Belagelemente ausreichen, die Belagelemente miteinander zu verbinden und in möglichst vielen Richtung relativ zueinander zu verriegeln, sodass eine Bewegung der so miteinander verriegelten Belagelemente relativ zueinander nicht mehr möglich ist.

Das wenigstens eine Leitungselement kann jedoch auch so ausgebildet sein, dass es sich über die gesamte Dicke des Belagsystems, also von der Sichtseite bis zur gegenüberliegenden Unterseite, erstreckt. Vorzugsweise sind Verriegelungs- und/oder Verbindungselemente an dem wenigstens ein Leitungselement angeordnet, die zu einem Verriegelungs- und/oder Verbindungselement an einer Seitenfläche eines Belagelemente korrespondierend ausgebildet sind, sodass die Verbindung und/oder Verriegelung zwischen dem Belagelement und dem Leitungselement erfolgt. Das Leitungselement kann auf der gegenüberliegenden Seite, die dem anderen Belagelemente zugeordnet ist, ebenfalls mit Verriegelungs- und/oder Verbindungselementen ausgebildet sein, mit denen es an dem jeweiligen Belagelement positionierbar ist.

In einer bevorzugten Ausgestaltung verfügt das Belagsystem über wenigstens ein Leitungselement zwischen allen verwendeten Belagelementen. Auf diese Weise kann die physikalische Größe, das Material oder das Signal an nahezu jede Stelle des mit dem Belagsystem versehenen Fußbodens, der Wand und/oder der Decke geleitet werden, ohne dass aufwendig Kabel, Rohrleitungen oder sonstige Elemente verlegt werden müssten. Besonders bevorzugt verfügt das Belagsystem über Schnittstellen der Leitungselemente, die es ermöglichen, Leitungselemente auch zwischen einem Belagelement eines Fußbodens und einem Belagelement einer Wand oder einem Belagelement einer Wand und einem Belagelement einer Decke anzuordnen. Insbesondere können sich Leitungselemente auch von einem Fußboden an eine Wand oder von einer Wand an eine Decke erstrecken. Auf diese Weise kann der gesamte Raum mit der physikalischen Größe, dem Materials oder den Signalen versehen und versorgt werden.

Vorzugsweise verfügt das Belagsystem über wenigstens zwei Leitungselemente, die jeweils korrespondierende Schnittstellen aufweisen und derart miteinander verbunden sind, dass die physikalische Größe, das Material oder die Signale von einem Leitungselement in ein benachbartes Leitungselement leitbar sind. Besonders bevorzugt verfügt zumindest ein Teil der Leitungselemente über Schnittstellen, mit denen drei oder vier Leitelemente miteinander verbindbar sind. Auf diese Weise können "T"-Kreuzungen sowie herkömmliche Kreuzungen hergestellt werden. Dies ist insbesondere dann von Vorteil, wenn zwischen plattenförmigen Belagelementen nicht nur entlang einer Richtung, sondern entlang zweier unterschiedlicher Richtungen, die bevorzugt senkrecht aufeinander stehen, Leitungselemente vorhanden sein sollen.

Bevorzugt verfügt wenigstens eines der Leitungselemente, bevorzugt alle Leitungselemente, über einen Leiter zum Leiten der physikalischen Größe, des Materials oder der Signale und über eine Deckschicht, wobei die Deckschicht derart angeordnet ist, dass sie an der Sichtseite sichtbar ist. Der eigentliche Leiter zum Leiten der physikalischen Größe, des Materials oder der Signale kann beispielsweise ein Kabel, insbesondere ein Metallkabel oder ein Glasfaserkabel, ein Metallkeder, ein Rohr, eine Rohrleitung oder ein Schlauch sein. Für den Fall, dass durch das wenigstens eine Leitungselement ein dekorativer Effekt hervorgerufen werden soll, der durch den Leiter bereits erreicht wird, ist es von Vorteil, wenn das Leitungselement keine den Leiter überdecken Deckschicht aufweist. Soll jedoch ein anderer dekorativer Effekt hervorgerufen werden, ist die Deckschicht von Vorteil. Sie kann dekorativ gestaltet werden und ist was Farbe, Material und Oberflächenbeschaffenheit angeht, nahezu völlig frei gestaltbar.

Vorzugsweise ist wenigstens ein Leiter, bevorzugt jedoch alle Leiter, mit einem separaten Schnittstellenelement verbunden, an dem eine Schnittstelle zum Verbinden mit einem anderen Leiter angeordnet ist. Ein derartiges Schnittstellenelement verbindet zwei, drei oder vier Leiter miteinander. Natürlich kann auch eine andere Anzahl von Leitern miteinander verbunden werden. Dies ist immer dann sinnvoll, wenn die physikalische Größe, das Material oder das Signal von einem Leiter auf einen oder mehrere andere Leiter verteilt werden soll. Besonders bevorzugt sind zumindest auch Schnittstellenelemente verwendet und vorhanden, die es erlauben, dass zwei Leitungselemente sich kreuzen, ohne dass es zu einem Austausch der physikalischen Größe, des Materials oder der Signale zwischen den beiden Leitungselement kommt. Ein Schnittstellenelement, dass dieses möglich macht, verfügt bevorzugt über wenigstens vier Möglichkeiten, mit einem Leiter verbunden zu werden, wobei die unterschiedlichen Leitungselemente erzeugt werden und die physikalische Größe, das Material oder das Signal nicht von jedem verbunden Leiter in jeden verbunden Leiter übertragen werden kann.

Bevorzugt verfügen mehrere Leitungselemente über eine Schnittstelle zu einer Quelle oder einem Verbraucher der physikalischen Größe, des Materials oder der Signale.

Vorteilhafterweise ist die physikalische Größe Wärme oder elektrischer Strom. Sind die Leitungselemente eingerichtet, Wärme zu transportieren, lässt sich damit eine gezielte Wärmeverteilung in dem Belagsystem erreichen, in dem Leitungselemente nach Bedarf in dem Belagsystem verteilt werden. Handelt es sich bei dem Belagsystem beispielsweise um einen Fußboden, ist es beispielsweise von Vorteil, die hauptlauffähige in einem Zimmer, dessen Fußboden mit dem Belagsystem ausgestattet ist, mit mehr Leitungselement zu versehen als beispielsweise Teile des Belagsystems, die unter einem Schrank oder unter einem Teppich angeordnet sind. Sollen die Leitungselemente nicht zwischen allen Belagelementen angeordnet werden, ist es von Vorteil, wenn sich die Belagelemente, zwischen denen ein Leitungselement angeordnet werden soll, von denen unterscheiden, zwischen denen kein Leitungselement angeordnet werden kann. Bevorzugt verfügen die Belagelemente, zwischen denen ein Leitungselement angeordnet werden kann, über die bereits beschriebene Vertiefung, Rillen oder Nut in der Sichtseite, wenn die Belagelemente miteinander verbunden sind. Belagelemente, zwischen denen kein Leitungselement angeordnet werden soll, verfügen bevorzugt über keine derartige Vertiefung, Rillen oder Nut.

Handelt es sich bei der physikalischen Größe um elektrischer Strom, kann dieser beispielsweise dafür verwendet werden, über einen Ohm'schen Widerstand in Wärme umgesetzt zu werden. Auch dadurch kann eine Fußbodenheizung realisiert werden. Insbesondere bei der Verwendung eines Leitungselementes zum Leiten eines elektrischen Stroms ist es sinnvoll, eine Deckschicht aus einem elektrisch isolierenden Material vorzusehen, um Personen, die auf dem Belagsystem gehen, keine Gefahr auszusetzen. Alternativ oder zusätzlich dazu kann der zu leitende elektrische Strom jedoch auch verwendet werden, um Verbraucher des elektrischen Stroms zu versorgen. Dies kann jegliches elektrische oder elektronische Gerät sein, das mit einer Stromversorgung ausgestattet werden kann oder muss. Eine derartige Ausgestaltung eines Belagsystems kann die Anordnung mehrerer Steckdosen in den Wänden eines Raumes überflüssig machen und insbesondere eine unauffällige und/oder dekorativ ansprechende Versorgung mehrerer elektrischer Geräte mit elektrischen Strom auch dann möglich machen, wenn in den jeweiligen Raum keine ausreichende Anzahl Steckdosen vorhanden ist. Die Verwendung von unschönen, gegebenenfalls gefährlichen Mehrfachsteckdosen kann auf diese Weise verhindert werden.

Alternativ oder zusätzlich dazu ist das wenigstens eine Leitungselement eingerichtet zum Leiten eines Materials. Dabei handelt es sich vorzugsweise um ein Fluid, also eine Flüssigkeit oder ein Gas. Vorzugsweise handelt es sich bei dem Material um eine Flüssigkeit, insbesondere eine wärmetragende Flüssigkeit, beispielsweise ein Thermoöl. Es dient dazu, die mit dem Belagsystem versehene Fläche zu erwärmen und beispielsweise eine Fußbodenheizung zu realisieren. Selbstverständlich kann ein derartiges System auch verwendet werden, um einen Raum zu kühlen, in dem keine erwärmte, sondern ein in der Temperatur abgesenktes Material, insbesondere eine Kühlflüssigkeit, verwendet wird.

Alternativ oder zusätzlich dazu ist das Leitungselement eingerichtet, elektrische, elektronische oder optische Signale zu leiten. Diese können beispielsweise von einem Internetanschluss, beispielsweise einem Router zu einem Computer, Tablet oder sonstigem Gerät übermittelt werden. WLAN-Verstärker können auf diese Weise ersetzt und gleichzeitig die Datenübertragungsrate erhöht und damit die Stabilität des Netzes verbessert werden. Auch andere elektrische oder elektronische Signale, für die ansonsten separate Kabel gelegt werden müssten, können über die Leitungselemente des Belagsystems transportiert und geleitet werden.

Wenn die Leitungselemente einen Leiter mit einem separaten Schnittstellenelement aufweisen, kann das Belagsystem auch an die jeweiligen Abmessungen eines Raumes, der mit dem Belagsystem versehen werden soll, angepasst werden. Sowohl die Belagelemente als auch die Leitungselemente können auf die gewünschte Länge geschnitten werden. Dabei wird von dem Leitungselement der Leiter auf die gewünschte Länge geschnitten und anschließend mit dem jeweils benötigten separaten Schnittstellenelement verbunden.

In einer bevorzugten Ausgestaltung verfügt ein Schnittstellenelement, mit einem solchen Leiter verbindbar ist, nicht nur über die Möglichkeit, mehrere der Leiter miteinander zu verbinden, sondern bevorzugt zudem über eine Schnittstelle für einen Verbraucher oder eine Quelle der physikalischen Größe, des Materials oder der Signale. Auf diese Weise kann der nahezu jeder Stelle des mit dem Belagsystem versehenen Fußbodens, Wand oder Decke der jeweilige Verbraucher angeordnet und ohne störende Kabel, Schläuche oder Rohrleitungen mit der benötigten physikalischen Größe, dem Material oder der Signale versorgt werden.

Vorzugsweise ist wenigstens eine Schnittstelle eine Strom-Steckdose, insbesondere für Schutzkontaktstecker, eine LAN-Steckdose, eine TV- oder Antennensteckdose, eine USB- oder HDMI-Steckdose oder eine Induktionsspule. All diese Schnittstellen ermöglichen es, elektrischen Strom und/oder elektrische oder elektronische Signale von einem Leitungselement oder dessen Leiter an einen Verbraucher oder von einer Quelle an das Leitungselement oder dessen Leiter zu übergeben.

Bevorzugt ist die Deckschicht aus einem elektrisch isolierenden Material hergestellt. Vorzugsweise sind wenigstens zwei Belagelemente mittels wenigstens eines Leitungselementes miteinander verbunden und bevorzugt miteinander verriegelt. Dies bedeutet insbesondere, dass das Leitungselement über Verbindungs- und/oder Verriegelungselemente verfügt, über die es mit beiden zu verbindenden Belagelemente verbunden und/oder verriegelt werden kann.

Das wenigstens eine Leitungselement ist bevorzugt aus einem Metall, beispielsweise Kupfer oder Eisen hergestellt und bevorzugt in Form eines Keders ausgebildet. Alternativ oder zusätzlich dazu ist das Leitungselement aus einem Fasermaterial, beispielsweise Carbonfasern oder Glasfasern hergestellt. Dies ist insbesondere zum Leiten von elektrischen und/oder elektronischen aber auch von optischen Signalen von Vorteil. Eine Verbindung zu einer Hauptquelle, beispielsweise einer Stromversorgung, einer Datenversorgung oder einer Wärmeversorgung, erfolgt vorteilhafterweise am Rand einer Verlegefläche des Belagsystems. Alternativ oder zusätzlich dazu kann diese Verbindung auch insbesondere entlang einer langen Seite der bevorzugt rechteckig ausgebildeten Belagelemente erfolgen. Eine Verbindung an einer kurzen Seite der Belagelemente ist ebenfalls möglich.

Vorteilhafterweise verfügt das Belagsystem über eine Steuereinheit, über die beispielsweise die Menge des zu leitenden Materials, der zu leitenden physikalischen Größe oder der Signale gesteuert werden kann. Das Belagsystem kann bevorzugt an Wärmepumpen, Warmwasserheizelemente und sonstige Niedrigenergieanlagen angeschlossen werden. Auch Versorgungspunkte für kabellose Stromübertragungen können in sämtlichen Bereichen des Belagsystems beispielsweise in Form von Induktionsspule, angeordnet werden. Für die Verwendung als Heizelement kann das Leitelement aus nahezu allen Materialien bestehen, die sich elektrisch erwärmen lassen.

Aus dem Stand der Technik ist es bekannt, Carbonfasern in ein Dekorpapier einzuarbeiten, das als elektrisch leitfähiges Papier bei Fußboden-Paneel verwendet werden kann. Dies ist ebenfalls aus der EP 2 770 104 B1 bekannt. Durch die erfindungsgemäße Ausgestaltung kann über das wenigstens eine Leitungselement ein elektrischer Kontakt zu diesen Carbonfasern hergestellt und so eine Stromversorgung auch in einer großen Ausgestaltung des Belagsystems sichergestellt werden.

In einer konkreten Ausführungsform kann das Leitungselement an eine 220V Stromversorgung angeschlossen sein. Das Material des Leitungselementes besteht in diesem Fall aus Material, welches sich besonders gut mit Strom erwärmen lässt - z.B. aus einer stark wärmeabgebenden Carbonlitze (Carbonfasern), welche beispielsweise mit einem schadstofffreien temperaturfesten Silikon ummantelt ist. An der Sichtseite, also am Kontaktpunkt zur Raumluft, kann die Carbonlitze mit einer robusten Keramik-Oberfläche (z.B. PolyVison) für maximale Wärmeabgabe von Wärmewellen beschichtet sein. Die Farbe und damit der dekorative Effekt ist frei wählbar. Über ein Raumthermostat, einen Trafo oder andere Regler kann die Stromzufuhr und dadurch die Raumtemperatur geregelt werden. In Bereichen, in denen Kontakt zu Personen möglich sein kann (z.B. Fußboden) kann die Oberflächentemperatur durch Sensoren reguliert werden. Bevorzugt erfolgt eine Abschaltung bei 38 °C. Fällt die Temperatur unter 25 °C Oberflächentemperatur, wird wieder eingeschaltet. Weiterhin kann die Oberflächenbeschichtung aus Stahl, Naturstein oder anderen wärmeabstrahlenden Materialien bestehen. Nach unten hin, also von der Sichtseite weg, ist die Carbonfaser bevorzugt sehr gut durch das Belagelement (z.B. Holzwerkstoff) isoliert und gibt die Wärme hauptsächlich direkt an die Oberfläche/Raumluft ab. Bei guter Raumisolierung werden ca. 50 Watt pro Quadratmeter an Heizleistung benötigt um eine angenehme Raumtemperatur zu erzeugen. Für eine Wohnung mit beispielsweise 60 Quadratmetern werden folglich ca. 3000W benötigt. Bei einer Belagelementgröße von 140x20cm ergeben sich ca. 215 Belagelemente mit etwa 300 m Leitungselementen an den langen Seiten. Es werden dementsprechend ca. 10 Watt pro Meter benötigt. Der Querschnitt der Leitungselemente und bevorzugt deren Leiter kann entsprechend angepasst werden.

In einer anderen Ausführungsform ist das wenigstens eine Leitungselement an eine externe Wärmeversorgung angeschlossen. Dabei ist es so ausgeformt, dass in einem Hohlraum beispielsweise erwärmtes Wasser (ca. 20-38 °C) über eine Zirkulationspumpe aus einer Wärmepumpenanlage/Warmwasseranalgen fließt. Das erwärme Wasser erwärmt wiederum das Material des wenigstens einen Leitungselementes und dieses gibt die Wärme an die Raumluft ab. Bevorzugt ist das Material des wenigstens einen Leitungselementes im oberen Bereich, also zur Sichtseite hin, an der der Kontakt zur Raumluft stattfindet, besonders gut wärmeleitend und in Richtung der Belagelemente, also von der Sichtseite weg, aus isolierenden Materialien. Über Raumthermostate oder andere Regler kann der Durchfluss und dadurch die Raumtemperatur geregelt werden.

In einer weiteren Ausführungsform wird das wenigstens eine Leitungselement an eine 220V Stromversorgung angeschlossen. Das Material des wenigstens einen Leitungselementes besteht in diesem Fall aus Material, welches elektrischen Strom leitet. Die Anordnung ist so ausgeführt, dass eine Senderspule entsteht. Verbraucher, die eine Empfängerspule enthalten, können auf die Senderspule gelegt/gestellt werden, um induktiv Energie für Aufladung oder Verbrauch zu übertragen. Über einen Trafo oder andere Regler kann die Stromzufuhr geregelt werden. Dadurch kann sicher punktuell innerhalb der von dem Belagsystem überdeckten Fläche Strom für Verbraucher abgenommen werden, beispielsweise für Mobiltelefone, LED Lampen, Ladestationen oder sonstige Verbraucher.

In einer weiteren Ausführungsform wird das wenigstens eine Leitungselement an eine 220V Stromversorgung angeschlossen. Das Material des wenigstens einen Leitungselementes besteht in diesem Fall aus Material, welches elektrischen Strom oder elektronische Daten leitet. Über einen Trafo oder andere Regler kann die Stromzufuhr geregelt werden. An Punkten des Leitungselementes, beispielweise je Belagelement einmal, können Abnahmestellen integriert (beispielsweise Mini USB-Schnittstelle, Strom-Steckdose, Kopfhöreranschlüsse, LAN-Steckdose, TV-oder Antennendosen) Diese können an der Sichtseite durch einen Deckel vor äußeren Einflüssen wie Feuchtigkeit geschützt sein.

In einer weiteren Ausführungsform wird das wenigstens eine Leitungselement an einen WLAN-Router angeschlossen. Das Material des Leitungselementes besteht in diesem Fall aus Material, welches Signale eines Routers weiter senden kann (beispielsweise einem Metall, bevorzugt Blech). Am Rand der durch das Belagsystem überdeckten Fläche wird ein Koaxialkabel angeschlossen, welches mit dem Router verbunden werden kann.

Vorzugsweise verfügt das Belagsystem über eine eine Quelle der physikalischen Größe, des Materials oder der Signale aufweist, die mit der Schnittstelle verbunden ist. Die wenigstens eine Schnittstelle und/oder die Schnittstellen des wenigstens einen Schnittstellenelementes sind vorzugsweise als Formschlusselement ausgebildet, wobei Formschlusselemente vorzugsweise dann als korrespondierend angesehen werden, wenn sie miteinander eine formschlüssige Verbindung eingehen können.

Mithilfe der beiliegenden Zeichnungen werden nachfolgend einige Ausführungsbeispiele der vorliegenden Erfindung näher erläutert. Es zeigt
- Figur 1 -: die schematische Draufsicht auf ein Belagsystem gemäß einem ersten Ausführungsbeispiel der vorliegenden Erfindung,
- Figur 2 -: die schematische Draufsicht auf ein Belagsystem gemäß einem zweiten Ausführungsbeispiel der vorliegenden Erfindung und
- Figur 3 -: die schematische Schnittdarstellung durch zwei verbundene Belagelemente.

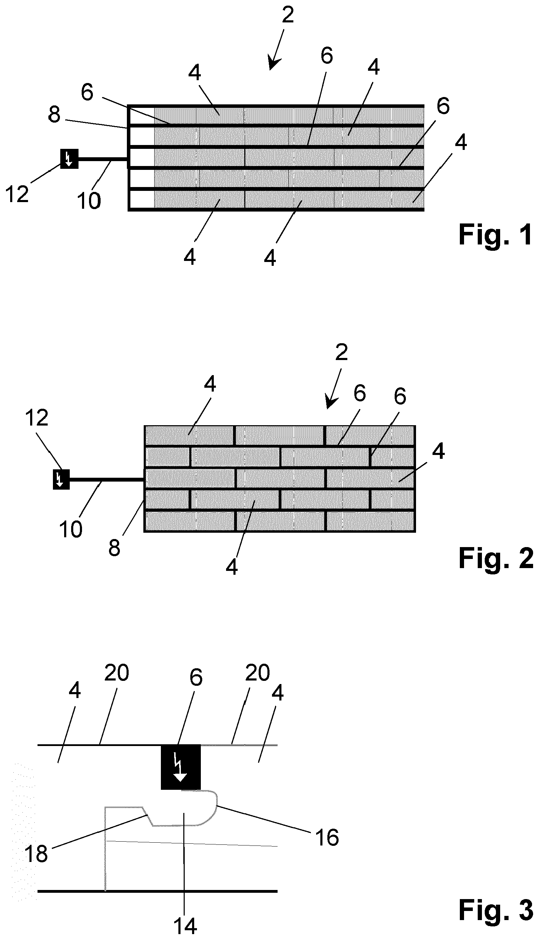

Figur 1 zeigt eine schematische Draufsicht auf ein Belagsystem 2 gemäß einem ersten Ausführungsbeispiel der vorliegenden Erfindung. Es verfügt über eine Vielzahl von Belagelementen 4 in Form von Fußbodenpaneelen. Diese sind rechteckig ausgebildet und verfügen über zwei lange Seiten und zwei kurze Seiten. Entlang der langen Seiten befinden sich Leitungselemente 6, die parallel zueinander angeordnet und durch fett gedruckte Linien dargestellt sind. Entlang einer Stirnseite 8 der durch das Belagsystem 2 überdeckten Fläche sind die verschiedenen Leitungselemente 6 miteinander verbunden, was durch die ebenfalls fett gedruckte Linie dargestellt ist an dieser Stelle befindet sich auch eine Schnittstelle 10 zu einer zentralen Stromversorgung 12.

Figur 2 zeigt eine ähnliche Darstellung. Auch hier sind die einzelnen Belagelemente 4 in Reihen angeordnet und verfügen über lange Seiten und kurze Seiten. Im Unterschied zu Figur 1 sind hier jedoch auch entlang der kurzen Seite Leitungselemente 6 vorhanden, die alle miteinander verbunden sind. Über die Schnittstelle 10 ist jedes der Leitungselemente 6 mit einer zentralen Stromversorgung 12 verbunden.

Figur 3 zeigt einen Schnitt durch 2 verbundene Belagelemente 4 das links dargestellte Belagelement 4 verfügt über eine Feder 14, die in eine dafür vorgesehene Nut 16 des Rechts dargestellten Belagelementes 4 eingeführt wird. Beide gemeinsam bilden auch Verriegelungselemente 18, die ein versehentliches Lösen der beiden Belagelemente 4 voneinander verhindern. An der Sichtseite 20 der beiden Belagelemente 4 befindet sich zwischen den beiden Belagelemente 4 das Leitungselement 6, das im gezeigten Ausführungsbeispiel elektrischen Strom leitet.

### Bezugszeichenliste

- 2: Belagsystem
- 4: Belagelement
- 6: Leitungselement
- 8: Stirnseite
- 10: Schnittstelle
- 12: zentrale Stromversorgung
- 14: Feder
- 16: Nut
- 18: Verriegelungselement
- 20: Sichtseite

## Patentansprüche

1. Belagsystem für einen Fußboden, eine Wand und/oder eine Decke, wobei das Belagsystem
- eine Sichtseite,
- eine der Sichtseite gegenüberliegende Unterseite und
- eine Mehrzahl miteinander verbundener Belagelemente aufweist,
wobei zwischen wenigstens zwei der Belagelemente wenigstens ein Leitungselement derart angeordnet ist, dass das wenigstens eine Leitungselement zumindest abschnittsweise an der Sichtseite sichtbar ist,
**dadurch gekennzeichnet, dass**
das wenigstens eine Leitungselement eingerichtet ist zum Leiten einer physikalischen Größe, eines Materials oder von Signalen, wobei wenigstens ein Leitungselement eine Schnittstelle zu einer Quelle oder einem Verbraucher der physikalischen Größe, des Materials oder der Signale aufweist.

2. Belagsystem nach Anspruch 1, **dadurch gekennzeichnet, dass** das Belagsystem wenigstens zwei Leitungselemente aufweist, die jeweils korrespondierende Schnittstellen aufweisen und derart miteinander verbunden sind, dass die physikalische Größe, das Material oder die Signale von einem Leitungselement in ein benachbartes Leitungselement leitbar sind.

3. Belagsystem nach Anspruch 1 oder 2, **dadurch gekennzeichnet, dass** das wenigstens eine Leitungselement einen Leiter zum Leiten der physikalischen Größe, des Materials oder der Signale und eine Deckschicht aufweist, wobei die Deckschicht derart angeordnet ist, dass sie an der Sichtseite sichtbar ist.

4. Belagsystem nach Anspruch 3, **dadurch gekennzeichnet, dass** wenigstens eine Leitungselelent mit einem separaten Schnittstellenelement verbunden ist, an dem eine Schnittstelle zum Verbinden mit einem anderen Leiter angeordnet ist.

5. Belagsystem nach einem der vorstehenden Ansprüche, **dadurch gekennzeichnet, dass** mehrere Leitungselemente eine Schnittstelle zu einer Quelle oder einem Verbraucher der physikalischen Größe, des Materials oder der Signale aufweist.

6. Belagsystem nach einem der vorstehenden Ansprüche, **dadurch gekennzeichnet dass** die physikalische Größe Wärme oder elektrischer Strom ist oder dadurch, dass das Material ein Fluid, insbesondere eine Flüssigkeit, ist oder dadurch, dass die Signale elektrische, elektronische oder optische Signale sind.

7. Belagsystem nach einem der vorstehenden Ansprüche, **dadurch gekennzeichnet, dass** wenigstens eine Schnittstelle eine Strom-Steckdose, insbesondere für einen Schuko-Stecker, eine LAN- Steckdose, eine TV- oder Antennensteckdose, eine USB-, HDMI- Steckdose oder eine Induktionsspule ist.

8. Belagsystem nach einem der Ansprüche 3 bis 7, **dadurch gekennzeichnet, dass** die Deckschicht aus einem elektrisch isolierenden Material hergestellt ist.

9. Belagsystem nach einem der vorstehenden Ansprüche, **dadurch gekennzeichnet, dass** wenigstens zwei Belagelemente mittels wenigstens eines Leitungselementes miteinander verbunden und bevorzugt verriegelt sind.

10. Belagsystem nach einem der vorstehenden Ansprüche, **dadurch gekennzeichnet, dass** es eine Quelle der physikalischen Größe, des Materials oder der Signale aufweist, die mit der Schnittstelle verbunden ist.

## Geänderte Patentansprüche

### Geänderte Patentansprüche gemäss Regel 137(2) EPÜ.

1. Belagsystem für einen Fußboden, eine Wand und/oder eine Decke, wobei das Belagsystem
- eine Sichtseite,
- eine der Sichtseite gegenüberliegende Unterseite und
- eine Mehrzahl miteinander verbundener Belagelemente aufweist,
wobei zwischen wenigstens zwei der Belagelemente wenigstens ein Leitungselement derart angeordnet ist, dass das wenigstens eine Leitungselement zumindest abschnittsweise an der Sichtseite sichtbar ist,
**dadurch gekennzeichnet, dass**
das wenigstens eine Leitungselement eingerichtet ist zum Leiten des elektrischen Stromes, eines Materials oder von Signalen, wobei wenigstens ein Leitungselement eine Schnittstelle zu einer Quelle oder einem Verbraucher der physikalischen Größe, des Materials oder der Signale aufweist.

2. Belagsystem nach Anspruch 1, **dadurch gekennzeichnet, dass** das Belagsystem wenigstens zwei Leitungselemente aufweist, die jeweils korrespondierende Schnittstellen aufweisen und derart miteinander verbunden sind, dass der elektrische Strom, das Material oder die Signale von einem Leitungselement in ein benachbartes Leitungselement leitbar sind.

3. Belagsystem nach Anspruch 1 oder 2, **dadurch gekennzeichnet, dass** das wenigstens eine Leitungselement einen Leiter zum Leiten des elektrischen Stroms, des Materials oder der Signale und eine Deckschicht aufweist, wobei die Deckschicht derart angeordnet ist, dass sie an der Sichtseite sichtbar ist.

4. Belagsystem nach Anspruch 3, **dadurch gekennzeichnet, dass** wenigstens eine Leitungselelent mit einem separaten Schnittstellenelement verbunden ist, an dem eine Schnittstelle zum Verbinden mit einem anderen Leiter angeordnet ist.

5. Belagsystem nach einem der vorstehenden Ansprüche, **dadurch gekennzeichnet, dass** mehrere Leitungselemente eine Schnittstelle zu einer Quelle oder einem Verbraucher des elektrischen Stroms, des Materials oder der Signale aufweist.

6. Belagsystem nach einem der vorstehenden Ansprüche, **dadurch gekennzeichnet dass** das Material ein Fluid, insbesondere eine Flüssigkeit, ist oder dadurch, dass die Signale elektrische, elektronische oder optische Signale sind.

7. Belagsystem nach einem der vorstehenden Ansprüche, **dadurch gekennzeichnet, dass** wenigstens eine Schnittstelle eine Strom-Steckdose, insbesondere für einen Schuko-Stecker, eine LAN- Steckdose, eine TV- oder Antennensteckdose, eine USB-, HDMI- Steckdose oder eine Induktionsspule ist.

8. Belagsystem nach einem der Ansprüche 3 bis 7, **dadurch gekennzeichnet, dass** die Deckschicht aus einem elektrisch isolierenden Material hergestellt ist.

9. Belagsystem nach einem der vorstehenden Ansprüche, **dadurch gekennzeichnet, dass** wenigstens zwei Belagelemente mittels wenigstens eines Leitungselementes miteinander verbunden und bevorzugt verriegelt sind.

10. Belagsystem nach einem der vorstehenden Ansprüche, **dadurch gekennzeichnet, dass** es eine Quelle des elektrischen Stroms, des Materials oder der Signale aufweist, die mit der Schnittstelle verbunden ist.
